Europäisches Patentamt

European Patent Office

Office européen des brevets

(11) Publication number: **0 371 133 B1**

# EUROPEAN PATENT SPECIFICATION

(45) Date of publication of patent specification: **13.04.94**  (51) Int. Cl.⁵: **G01S 7/02**, G01S 13/48, G01S 13/90, H01Q 3/24

(21) Application number: **88907545.3**

(22) Date of filing: **10.02.88**

(86) International application number:
**PCT/JP88/00131**

(87) International publication number:
**WO 88/06295 (25.08.88 88/19)**

(54) **HOLOGRAPHIC RADAR.**

(30) Priority: **14.04.87 JP 91189/87**

(43) Date of publication of application:
**06.06.90 Bulletin 90/23**

(45) Publication of the grant of the patent:
**13.04.94 Bulletin 94/15**

(84) Designated Contracting States:
**DE FR GB**

(56) References cited:
**WO-A-85/00760**
**JP-A- 4 952 553**
**JP-A- 5 137 588**
**JP-B- 5 836 313**

**GEC JOURNAL OF RESEARCH, vol. 3, no. 1, 1985, pages 34-45, Chelmsford, GB; B. WARDROP et al.: "The role of digital processing in radar beamforming"**

(73) Proprietor: **MITSUBISHI DENKI KABUSHIKI KAISHA**
**2-3, Marunouchi 2-chome**
**Chiyoda-ku**
**Tokyo 100(JP)**

(72) Inventor: **FUJISAKA, Takahiko Mitsubishi Denki K.K.**
**Jouhou Denshi Kenkyusho**
**1-1 Ofuna**
**5-chome Kamakura-shi Kanagawa-ken 247(JP)**
Inventor: **OHASHI, Yoshimasa Mitsubishi Denki K.K.**
**Jouhou Denshi Kenkyusho**
**1-1 Ofuna**
**5-chome Kamakura-shi Kanagawa-ken 247(JP)**

EP 0 371 133 B1

EASCON '78 RECORD, September 25-27, 1978; A.E.RUVIN et al.: "Digital Multiple Beamforming Techniques for Radar", pages 152-163

Inventor: **KONDO, Mithimasa Mitsubishi Denki K.K.**
**Jouhou Denshi Kenkyusho**
**1-1 Ofuna**
**5-chome Kamakura-shi Kanagawa-ken 247(JP)**

(74) Representative: **Barnard, Eric Edward et al**
**BROOKES & MARTIN**
**High Holborn House**
**52/54 High Holborn**
**London WC1V 6SE (GB)**

## Description

## Technical Field

This invention relates to a holographic radar with improved 360° scanning performance and reduced size and weight.

## Background Art

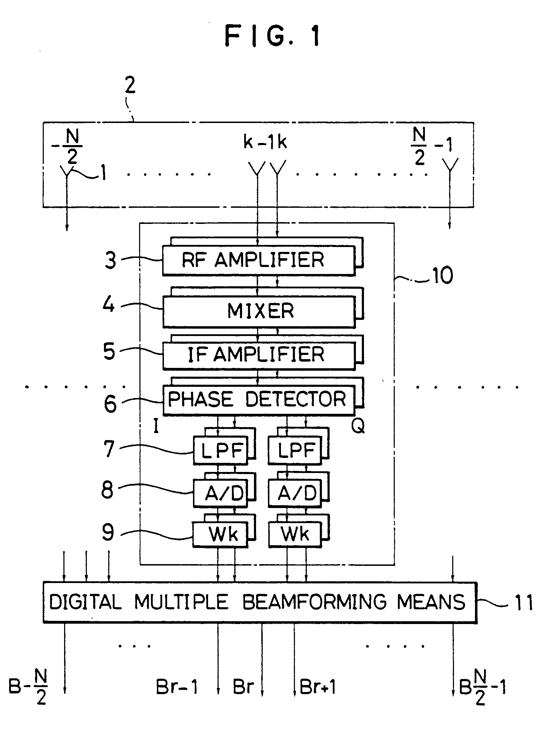

Fig. 1 is a block diagram of a prior-art holographic radar shown in the paper "Digital Multiple Beamforming Techniques for Radar" by Abraham E. Ruvin and Leonard Weinberg in EASCON-78 Record, a publication of the Institute of Electrical and Electronics Engineers (IEEE). The radar shown in Fig. 1 comprises N antenna elements 1 forming an antenna array 2, RF amplifiers 3 connected to the antenna elements to amplify the radio-frequency signal received by the antenna element, mixers 4 which convert the received RF signal to an intermediate-frequency signal, IF amplifiers 5 which amplify the intermediate-frequency signal output from the mixers 5, phase detectors 6 which convert the output of the IF amplifiers to a baseband complex video signal while preserving the phase of the intermediate-frequency signal, low-pass filters 7 connected to the I (in-phase) channel output and Q (quadrature) channel output of the phase detectors 6, A/D converters 8 connected to the low-pass filters 7 for converting the analog baseband complex video signal to a digital signal, and multipliers 9 for weighting the digital signals output by the A/D converters 8 to adjust the sidelobe levels in the beamforming process. Receivers 10 comprise the preceding components 3 to 9. A digital multiple beamformer 11 performs mathematical operations on the outputs of the receivers 10 connected to the respective antenna elements 1 to create multiple beams corresponding in number to the number of antenna elements.

This radar operates as described next.

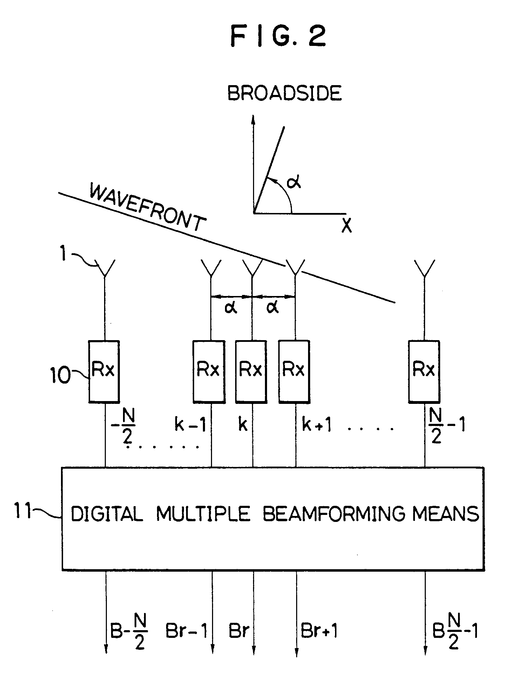

The radio-frequency signals received by the N antenna elements are amplified by the RF amplifiers 3, then down-converted by the mixers 4 to an intermediate frequency and amplified again by the IF amplifiers 5. The phase of the intermediate-frequency signals is detected by the phase detectors 6, which convert the signals to complex video signals comprising an I-channel component and a Q-channel component. The complex video signals are band-restricted by the low-pass filters 7, converted to digital complex video signals by the A/D converters 8, and weighted by the multipliers 9 to reduce the side lobes in the beamforming process, then supplied to the digital multiple beamformer 11. The direction in which the N antenna elements are aligned is shown as the x-axis in Fig. 2. Let $\alpha$ be the angle of the incoming RF wavefront with respect to the x-axis, let d be the antenna element spacing, and let $\lambda$ be the wavelength. The phase difference between the signals received by adjacent antenna elements is then $2\pi(d\cos\alpha)$. The digital multiple beamformer 11 can simultaneously create N beams (r = -N/2, ..., 0, ..., N/2-1) having a maximum gain at $\alpha r = \cos^{-1}(r\lambda/Nd)$ by performing the following calculations:

$$B r = \sum_{k=-N/2}^{N/2-1} W k \; \exp\left(j 2\pi k d \cos \alpha / \lambda\right)$$
$$\exp\left(-j\left(2\pi / N\right) k r\right)$$

$$r = -N/2, -N/2+1, \cdots, 0, \cdots\cdots, N/2-1 \qquad (1)$$

where Wk is a weighting coefficient introduced by the multipliers in the receiver 10 to suppress side lobes.

The beam width $\delta r$ of the r-th beam is given by equation (2) below:

$$\delta r = w\lambda/Nd \sin \alpha r \qquad (2)$$

The interval $\Delta\alpha r$ between the r-th beam and the r-1-th beam is given by equation (3):

$$\triangle \alpha_r = \alpha_r - \alpha_{r-1}$$

$$= \lambda / Nd \ \sin \alpha_r \qquad (3)$$

In equation (2), w is a constant determined by the coefficients Wk, and is generally set in the range from about 0.88 to 1.3. In the digital multiple beamformer 11, equation (1) describes a discrete Fourier transform (DFT). Holographic radars therefore employ the fast Fourier transform (FFT) algorithm to efficiently form a multiple beam in the field of observation, which is the coverage field determined by the antenna element beam width.

Due to the configuration described above, the field of observation of prior-art holographic radars is limited by the antenna element beam width (approximately 120°). To scan the entire 360° field it is necessary for the radar to be rotated mechanically, which lengthens the time required for a 360° scan, or for the field to be divided among three or four radars, which increases the cost of the apparatus.

Another problem is that a separate receiver is required for each antenna element, in contrast to a phased-array radar which performs analog beam forming in the RF stage. The large number of receivers adds significantly to the size and weight of the apparatus, and the receivers consume considerable power.

WO-86/00760 provides a further multi beam antenna system having three sub-arrays and a high RF power switching capability. Electronic switch means enables different beam positions to be provided in an azimuthal hemispace in the range of only 0° to 180°.

**Disclosure of Invention**

As is known from Figure 1, the present invention provides a holographic radar comprises a first antenna array comprising a plurality of antenna elements, a plurality of receivers and a digital multiple beam forming means for using the outputs of said receivers to generate multiple beams. In accordance with the invention, the radar also comprises a further one or more antenna arrays each comprising a plurality of antenna elements, array switches for switching the connections between the plurality of receivers and the plurality of antenna arrays so that the plurality of receivers are connected to the antenna elements in one of the arrays at a time and switch controlling means for controlling the timing of switching of said array switches according to pulse hit numbers and range bin numbers.

By switching a single set of receivers among a number of antenna arrays, radar in accordance with this invention can enable a 360° scan to be accomplished rapidly and inexpensively.

To further reduce the number of receivers in a single antenna array, one receiver can be provided for every K antenna elements (where K is an integer equal to or greater than one), memory elements can be provided for storing the data output of the receivers and time division switches can be provided for switching the connections between the antenna elements and the array switches and between the receivers and the memory elements. These additional switches enable each receiver to process the RF signals received by the K antenna elements so the number of receivers can be reduced by a further factor of K, making the radar small in size and light in weight.

In a further embodiment the first antenna array and the further one or more antenna arrays are sub-arrays within a single array wherein the array switches and the receivers are provided for each antenna element in a single antenna sub-array.

**Brief Description of Drawings**

Figure 1 is a block diagram of a prior-art holographic radar.
Figure 2 illustrates the principle of operation of the radar in Figure 1.
Figure 3 is a block diagram of a holographic radar illustrating an embodiment of the present invention.
Figure 4 is an oblique view of a quadruple antenna array. Fig. 5 is a block diagram of a holographic radar illustrating another embodiment of the present invention.

**Best Mode of Carrying Out the Invention**

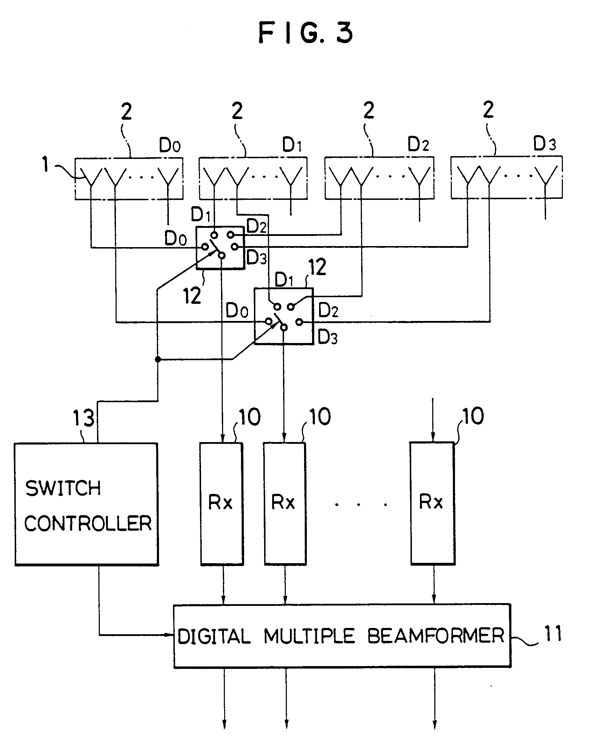

An embodiment of this invention will be explained with reference to the drawings. Fig. 3 shows a holographic radar comprising four antenna arrays 2, a set of receivers 10 equal in number to the antenna elements 1 in a single antenna array 2, switches 12 for switching the receivers 10 among the antenna arrays 2, and switch controlling means 13 for controlling the timing of the switches 12 according to a transmit pulse number and a range bin number. Components numbered 1 to 11 in Fig. 3 are identical to the corresponding components in Fig. 1.

The operation of this holographic radar will be described next. The operation of the receivers 10 and the digital multiple beamformer 11 will not be described because it is the same as in the prior art, but a detailed description will be given of the switches 12 and the switch controlling means 13, which are the new components in this embodiment.

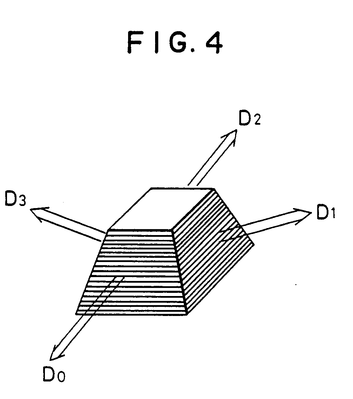

The four antenna arrays ($D_0$, $D_1$, $D_2$, $D_3$) are disposed as shown in Fig. 4, so that they divide the coverage range into four directions $D_0$, $D_1$, $D_2$, and $D_3$. Let Gt be the transmitting antenna gain, Gr be the receiving antenna gain after multiple beamforming, $\lambda$ be the transmit wavelength, Pt be the peak transmitting power, $\sigma$ be the radar cross-section of the target, SNR be the signal-to-noise power ratio, K be Boltzmann's constant, T represent absolute temperature, B be the receiver bandwidth, NF be the receiver noise figure, L be the system loss, $\Delta R$ be the range resolution, and k be the range bin number. Then the k-th pulse hit number Nk, which is the coherent integral number required in the k-th range bin, is given by equation (4).

$$ Nk = \left\{ \frac{(4\pi)^3 \, KTB(NF) \, L(SNR)(\Delta R)^4}{Pt \; Gt \; Gr \; \lambda^2 \; \sigma} \right\} \cdot k^4 \qquad (4) $$

The parameters inside the braces {} in equation (4) are constants characteristic of the individual radar system, so the required pulse hit number Nk is proportional to the fourth power of the range bin number k.

The switch controlling means 13 determines the required pulse hit number Nk in each range bin from equation (4) and the values of the parameters K, T, B, NF, L, SNR, $\Delta R$, Pt, Gr, $\lambda$, and $\sigma$ for the particular radar system. For each transmitted pulse, it divides the current transmit pulse number m by the required pulse hit number Nk for the range bin number k to obtain the quotient lk.

$$ lk = [m/Nk] \qquad (5) $$

The brackets [] in equation (5) are the Gaussian notation for the greatest integer. The remainder Jk when the quotient lk is divided by the number of antenna arrays (4) is also found. The switches 12 are set to connect the receivers to the $D_0$ antenna array 2 if Jk = 0, to the $D_1$ array if Jk = 1, to the $D_2$ array if Jk = 2, and to the $D_3$ array if Jk = 3. This operation is carried out in all range bins k for every transmit pulse number m, thereby providing 360° scan coverage by a set of receivers for a single antenna array much faster than if the array had been turned mechanically as in the prior art.

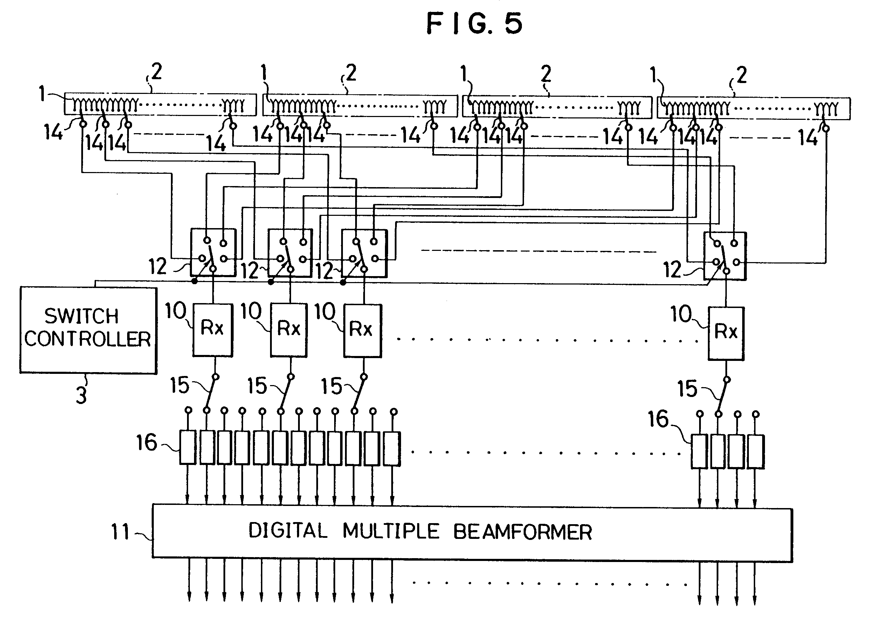

Another embodiment of this invention is illustrated in Fig. 5. In this embodiment a set of switches 14 are located between the antenna elements 1 and the antenna array-switching switches 12, and another set of switches 15 are provided that connect the receivers 10 with a set of memory elements 16 which store the output from the receivers 10. The components numbered 1 to 13 are the same as in the embodiment shown in Fig. 3.

The operation of a holographic radar according to the embodiment in Fig. 5 will be explained next. The internal operation of the receivers 10 and the digital multiple beamformer 11 will not be described because it is the same as in the prior art, but detailed descriptions will be given of the switches 14 and 15 and memory elements 16, which are the new elements in this embodiment.

The number of antenna elements N and the number of receivers L in this holographic radar are selected so that the ratio K = N/L is a natural number. Each group of K adjacent antenna elements is assigned to a single receiver 10. The L receivers 10 and the switches 14 and 15 connected to their input and output terminals all operate alike.

At the start of the observation, synchronized with the first transmitted pulse, the switches 14 are set to connect the input terminals of the switches 12 to the first antenna elements 1 in each group of K adjacent antenna elements 1 assigned one each receiver 10, and the switches 15 connect the output terminals of each receiver 10 to the first of its K assigned memory elements. The switches remain connected in this manner until the second transmit pulse is fired; during this interval the radio-frequency signals in all the range bins of the first antenna element in each group are amplified, detected, and A/D-converted, and the resulting digital complex video signals are stored in the first memory elements 16 in each group. Then in

EP 0 371 133 B1

synchronization with the second transmit pulse, the switches 14 and 15 switch to connect the second antenna element 1 in each group to the input terminal of the antenna array-switching switch 12, and connect the receiver output terminal to the second memory element 16, so that the radio-frequency signals received by the second antenna elements are amplified, detected, A/D-converted, and stored. This operation is repeated in sequence through the K-th transmit pulse. When complex video signals have been stored in all K memory elements 16 assigned to each of the L receivers 10, all the complex video signals are read out simultaneously, providing the digital multiple beamformer 11 with KL digital complex video signals, a number equal to the number N of antenna elements.

The digital multiple beam former 11 then generates N multiple beams in the same way as in the prior art, just as if N antenna elements and N receivers had been used.

## Industrial Applicability

This invention can be used to provide a compact, lightweight holographic radar with an improved 360° scan coverage rate. It can also be applied to other communication apparatus such as sonar apparatus and digital beamforming antennas that use a digital multiple beamformer.

## Claims

1. A holographic radar comprising a first antenna array (2) comprising a plurality of antenna elements (1), a plurality of receivers (10) and a digital multiple beam forming means (11) for using the outputs of said receivers (10) to generate multiple beams; characterised in that the radar also comprises a further one or more antenna arrays (2), each comprising a plurality of antenna elements (1), array switches (12) for switching the connections between the plurality of receivers (10) and the plurality of antenna arrays (2) so that the plurality of receivers (10) is connected to the antenna elements (1) in one of the arrays (2) at a time and switch controlling means (13) for controlling the timing of switching of said array switches (12) according to pulse hit numbers and range bin numbers.

2. A holographic radar according to claim 1, wherein said array switches (12) and said receivers (10) are provided, each per a group of plurality of antenna elements (1) in a single antenna array, with a plurality of said groups making up an antenna array (2) and said radar further comprises a plurality of memory elements (16) corresponding to the antenna elements (1) in one of the antenna arrays (2) for storing the output data from the receivers (10) and time division switches (14,15) disposed between said antenna elements (1) and said array switches (12) and between said receivers (10) and said memory elements (16), for time division input of the signals received in each group of antenna elements (1) through said array switches (12) to said receiver (10) and successive storage of the output of said receiver in the corresponding memory element.

3. A holographic radar as claimed in claim 1, wherein the first antenna array and the further one or more antenna arrays (2) are part of a single array, and the array switches (12) and the receivers (10) are provided for each antenna element (1) in the antenna array connected by the array switches (12) to the receivers (10).

## Patentansprüche

1. Holografischer Radar mit einer mehrere Antennenelemente (1) aufweisenden Antennenanordnung (2), einer Mehrzahl von Empfängern (10) und einer digitalen Vielfachstrahlenbildungsvorrichtung zur Verwendung der Ausgangssignale der Empfänger (10) für die Erzeugung von Vielfachstrahlen, **dadurch gekennzeichnet**, daß der Radar auch eine oder mehr weitere Antennenanordnungen (2) mit jeweils mehreren Antennenelementen (1), Feldschalter (12) zum Schalten der Verbindungen zwischen den mehreren Empfängern (10) und den mehreren Antennenanordnungen (2), so daß die mehreren Empfängern (10) zu einer Zeit mit den Antennenelementen (1) in einer der Anordnungen (2) verbunden sind, und eine Schaltersteuervorrichtung (13) zum zeitlichen Steuern der Schaltvorgänge der Feldschalter (12) entsprechend Impulstrefferzahlen und Entfernungselementzahlen.

2. Holografischer Radar nach Anspruch 1, worin die Feldschalter (12) und Empfänger (10) jeweils für eine Gruppe von Antennenelementen (1) in einer einzelnen Antennenanordnung vorgesehen sind, wobei eine Mehrheit der Gruppen eine Antennenanordnung (2) bildet, und der Radar weiterhin mehrere Speicherelemente (16) entsprechend den Antennenelementen (1) in einer der Antennenanordnungen (2) zum Speichern der Ausgangsdaten von den Empfängern (10) und zwischen den Antennenelementen (1) und den Feldschaltern (12) sowie zwischen den Empfängern (10) und den Speicherelementen (16) angeordnete Zeitteilungsschalter (14,15) aufweist für eine zeitgeteilte Eingabe der in jeder Gruppe von Antennenelementen empfangenen Signale über die Feldschalter (12) zu dem Empfänger (10) und eine aufeinanderfolgende Speicherung der Ausgangssignale des Empfängers in dem entsprechenden Speicherelement.

3. Holografischer Radar nach Anspruch 1, worin die erste Antennenanordnung und die eine oder mehr weiteren Antennenanordnungen (2) Teil einer einzelnen Anordnung sind, und die Feldschalter (12) und die Empfänger (10) für jedes Antennenelement (1) in der durch die Feldschalter (12) mit den Empfängern (10) verbundenen Antennenanordnung vorgesehen sind.

**Revendications**

1. Radar holographique qui comprend un premier réseau d'antennes (2) comprenant une pluralité d'éléments d'antenne (1), une pluralité de récepteurs (10) et des moyens de formation de faisceaux numériques multiples (11) pour utiliser les sorties desdits récepteurs (10) afin de produire des faisceaux multiples, caractérisé en ce que le radar comprend en outre un ou plusieurs autres réseaux d'antennes (2) comprenant chacun une pluralité d'éléments d'antenne (1), des commutateurs de réseau (12) pour commuter les liaisons entre la pluralité de récepteurs (10) et la pluralité de réseaux d'antennes (2), de sorte que la pluralité de récepteurs (10) est reliée aux éléments d'antenne (1) dans un seul des réseaux (2) à la fois, et des moyens de commande de commutation (13) pour commander le cadencement de la commutation desdits commutateurs de réseau en fonction des nombres d'échos d'impulsion et des nombres de cases distance.

2. Radar holographique selon la revendication 1, dans lequel lesdits commutateurs de réseau (12) et lesdits récepteurs (10) sont prévus, chacun pour un groupe de pluralité d'éléments d'antenne (1) dans un seul réseau d'antennes, une pluralité desdits groupes constituant un réseau d'antennes (2), et ledit radar comprend en outre une pluralité d'éléments de mémoire (16) correspondant aux éléments d'antenne (1) dans l'un des réseaux d'antennes (2) pour stocker les données émises par les récepteurs (10) et des commutateurs à division dans le temps (14, 15) disposés entre lesdits éléments d'antenne (1) et lesdits commutateurs de réseau (12) et entre lesdits récepteurs (10) et lesdits éléments de mémoire (16), pour un envoi à division dans le temps des signaux reçus dans chaque groupe d'éléments d'antenne (1), par l'intermédiaire desdits commutateurs de réseau (12), vers ledit récepteur (10), et un stockage successif de la sortie desdits récepteurs dans l'élément de mémoire correspondant.

3. Radar holographique selon la revendication 1, dans lequel le premier réseau d'antennes et le ou les autres réseaux d'antennes (2) font partie d'un réseau unique, et les commutateurs de réseau (12) et les récepteurs (10) sont prévus pour chaque élément d'antenne (1) dans le réseau d'antennes relié par les commutateurs de réseau (12) aux récepteurs (10).

# F I G. 1

# F I G. 2

BROADSIDE

WAVEFRONT

DIGITAL MULTIPLE BEAMFORMING MEANS

# F I G. 3

# FIG. 4

# FIG. 5

SWITCH CONTROLLER

DIGITAL MULTIPLE BEAMFORMER

EP 0 371 133 B1